(19) Europäisches Patentamt
European Patent Office
Office européen des brevets

(11) EP 3 494 374 B1

(12) **EUROPEAN PATENT SPECIFICATION**

(45) Date of publication and mention of the grant of the patent:
**13.05.2020 Bulletin 2020/20**

(21) Application number: **17751617.6**

(22) Date of filing: **13.07.2017**

(51) Int Cl.:
***G01K 7/32*** *(2006.01)* ***G01K 1/02*** *(2006.01)*

(86) International application number:
**PCT/EP2017/067679**

(87) International publication number:
**WO 2018/024457 (08.02.2018 Gazette 2018/06)**

(54) **THERMAL DETECTION SYSTEM AND METHOD**

WÄRMEDETEKTIONSSYSTEM UND -VERFAHREN

SYSTÈME ET PROCÉDÉ DE DÉTECTION THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2016 PCT/CN2016/092878**
**18.10.2016 EP 16194288**

(43) Date of publication of application:
**12.06.2019 Bulletin 2019/24**

(73) Proprietor: **Signify Holding B.V.**
**5656 AE Eindhoven (NL)**

(72) Inventor: **CHEN, Hong**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**JP-A- 2011 075 520**
**US-A1- 2016 047 695**
**US-B2- 9 228 906**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 494 374 B1

## Description

### FIELD OF THE INVENTION

The invention relates to temperature detection for example for electronic circuits, and in particular relates to thermal detection without the need for a dedicated thermal probe or sensor.

### BACKGROUND OF THE INVENTION

In many different circuits, the circuit temperature is a key factor for system health. One particular example is lighting circuits, where the lighting elements generate significant amounts of heat as well as the desired light output. Thermal information is increasingly important in lighting circuits because many more semiconductor components and other electronics components are used in lighting systems, such as LED luminaires and lighting controllers.

Currently, most thermal detectors are based on a thermal coupler or thermal resistor and relevant circuitry, in order to measure the temperature. Infrared radiation cameras are also known for this purpose for providing a non-contact measurement option. These solutions are mature but not simple enough and cost effective in cost sensitive products like luminaires. The required complex circuits may also cause potential reliability risks.

It is known that a crystal oscillator, for example as used to generate a microcontroller clock signal, has a temperature dependency of its output frequency. This means the oscillator response may be used to determine temperature without the need for a separate temperature sensor. It is for example known to compare a frequency of one crystal oscillator with another crystal oscillator which has a different dependence on temperature, in order to determine temperature information. One example of this approach is disclosed in US 9 228 906. Reference is also made to JP2011075520 A, which discloses a temperature sensing method for sensing the temperature of an imaging device making use of a plurality of quartz oscillators already present for other purpose. Each quartz oscillator has a different frequency-temperature dependency. A difference of the number of clock counts between the different quartz oscillators relates to temperature (based on a relationship obtained by prior calibration and stored in a correspondence table). Finally. US2016/047695 A1 discloses a temperature estimation circuit comprising a first silicon oscillator (11) which generates an oscillating signal (SA) with low frequency-temperature dependency while a second silicon oscillator (12) generates an oscillating signal (SB) with high frequency-temperature dependency. Counter (14) counts the number of oscillations of SA and SB during an enable period (EN). Count value (M) is compared to count values (M1, M2) obtained at known temperatures (T1, T2) during prior calibration to obtain temperature (Tmp).

This requires particular types of crystal oscillator as well as accurate measurement of frequency. This measurement becomes increasing difficult for crystal oscillators with low dependency of their output frequency on temperature. As a result, crystals with a high temperature dependency are needed, but this is against the general aim of having a frequency response which is independent of temperature.

There is therefore a need for a more simple and flexible solution for thermal detection and which does not require the general temperature stability of the circuit to be compromised.

### SUMMARY OF THE INVENTION

Examples in accordance with a first aspect of the invention provide a temperature sensing device for determining a temperature of a remote device, the remote device having a first controller which is clocked by a first crystal oscillator having a frequency-temperature characteristics, the first controller adapted to respond immediately or else a preset number of clock cycles later to communications from the temperature sensing device, the temperature sensing device comprising:

- a second controller which is clocked by a second crystal oscillator, wherein the clock speed of the clock signal of the second controller is higher than the clock speed of the clock signal of the first controller, wherein the temperature sensing device and the remote device communicate electronically with each other over a communication interface, wherein the second controller is adapted to:
  - initiate a chain of repeated sequential communications between the temperature sensing device and the remote device;
  - measure a time interval associated with the chain of repeated communications;
  - from the time interval determine a clocking frequency of the first controller of the remote device; and
  - from the clocking frequency, determine a temperature based on knowledge of the frequency-temperature characteristics of the first crystal oscillator.

This device determines a temperature by measuring a time interval associated with communications between two devices, which in particular includes a time delay resulting from different clocking frequencies. By measuring a time interval for a number of repeated sequential communications, it becomes possible to measure time interval values resulting from very small changes in crystal oscillator frequency and hence controller clock frequency. Thus, there is no need to use crystal oscillators with high temperature dependency of their output frequency. The temperature measurement may be implemented digitally. The remote device is "remote" in the

sense that it is exposed to a different temperature environment, so that heating caused by the remote device does not result in corresponding heating of the temperature sensing device.

The approach does not need modification to the hardware of the remote device, since it simply relies on communication with the remote device. The thermal status of the remote device is thus determined without any change in the existing product, in particular with no additional thermal sensor and associated circuits. The temperature sensing function is instead implemented based on signal communications and statistical analysis.

The device may comprise a transmitter and a receiver, wherein the controller is adapted to:

control the transmitter to transmit an activation signal to the remote device for activating the remote device;
control the transmitter to transmit a number of challenge signals to the remote device, wherein the remote device is adapted to respond to the number of challenge signals by sending back a response signal per challenge signal to the temperature sensing device; and
determine time intervals present between transmissions of the challenge signals and receptions of the response signals.

In this way, the remote device is first activated, following which the challenge signals (i.e. ping signals) are sent and the responses are monitored. The activation signal means that an individual remote device within a network of such devices may be addressed. The activation signal thus for example comprises an address for addressing one particular remote device.

The challenge signals and the response signals for example comprise square wave signals or step changes in voltage or short voltage pulses. The number of challenge signals and time intervals comprises at least two challenge signals and time intervals, preferably at least ten challenge signals and time intervals, more preferably at least one hundred challenge signals and time intervals etc. A time interval can be expressed in time or in numbers of clock pulses or in any other way.

The second controller is preferably adapted to perform a calibration process at two known temperatures, wherein at each of the two known temperatures, the second controller is adapted to:

make a chain of repeated sequential communications between the temperature sensing device and the remote device and measure a time interval for each communication;
calculate a reference time interval value for each temperature (e.g. an average time interval); and
obtain a crystal oscillator frequency of the first crystal oscillator from the known characteristics of the first crystal oscillator; and
derive a reference time interval and corresponding reference frequency based on the difference between the reference time intervals and the difference between the crystal oscillator frequencies.

This calibration process thus provides a mapping between a change in reference time value (e.g. average time value or other statistical value based on the measured time intervals) for the response to the challenge and a change in frequency. The change in reference time interval becomes a reference time value and the change in frequency becomes a reference frequency value. By deriving change values as the references, it becomes possible to compensate for any constant time interval contributions.

These reference values are then used for interpreting the measured average time value at the unknown temperature, in particular based on interpolation between, or extrapolation from, the two measurements at known temperature.

The clocking frequency of the first controller of the remote device may be obtained based on a statistical analysis. The statistical analysis for example comprises:

a calculation of a mean value or any other value of the time intervals or functions thereof; or
an analysis of a distribution or any other spread of the time intervals or functions thereof.

These different possible analyses of the time intervals may be used to assess the clock frequency of the remote device to a high accuracy. Functions of the time intervals may for example comprise numbers of clock pulses of the clock signal of the temperature sensing device within the time intervals or any other values derived from the time intervals. The two options may be combined.

The communications interface for example comprises a communication bus.

In one example the device comprises a lighting system controller. It is then able to monitor the temperature of lighting units (e.g. luminaires) under its control, as part of the overall system monitoring function.

The invention also provides a temperature sensing system, comprising:

a temperature sensing device as defined above;
the remote device connected to the temperature sensing device by the communications interface, wherein the remote device comprises:
a first controller which is adapted to respond immediately or else a preset number of clock cycles later to communications from the temperature sensing device.

The remote device thus responds to the ping messages in dependence on when the clock signal of the local controller is at the suitable transition.

The remote device may comprise:

a receiver adapted to receive the activation signal for activating the remote device and adapted to receive the number of challenge signals; and
a transmitter adapted to send back, in response to receptions of the number of challenge signals, the response signal per challenge signal to the temperature sensing device.

The remote device is thus first activated so that it then knows to respond to the ping messages of the temperature sensing device.

The remote device for example comprises a lighting load and associated local lighting controller. The remote device may for example comprise an LED luminaire.

The first crystal oscillator (i.e. the one in the remote device) may be an AT-cut quartz oscillator. This has low temperature dependency of its output frequency, which is desirable for circuit stability, but is undesirable when variations are being used to measure temperature. However, this low temperature dependency can be tolerated because the analysis is based on multiple time interval measurements and statistical analysis rather than frequency measurements.

The controller of the temperature sensing device may be adapted to implement a calibration measurement with the remote device at one or more known temperatures. This provides reference information for calibrating the subsequent temperature measurements.

Examples in accordance with another aspect of the invention provide a temperature sensing method, comprising:

initiating a chain of repeated sequential communications between a temperature sensing device having a second controller which is clocked by a second crystal oscillator and a remote device having a first controller which is clocked by a first crystal oscillator, wherein the temperature of the first crystal oscillator is less stable than the temperature of the second crystal oscillator;
measuring a time interval associated with the chain of repeated communications;
from the time interval determining a clocking frequency of the first controller of the remote device; and
from the clocking frequency, determining a temperature of the remote device based on knowledge of the frequency-temperature characteristics of the first crystal oscillator.

The temperature sensing device for example comprises a lighting system controller and the remote device then comprises a lighting load and associated local lighting controller.

The method may comprise implementing a calibration determination of the clocking frequency with the remote device at one more known temperatures.

The invention may be implemented at least in part in software.

## BRIEF DESCRIPTION OF THE DRAWINGS

Examples of the invention will now be described in detail with reference to the accompanying drawings, in which:

Figure 1 shows a network of a central control device and a set of remote load devices;
Figure 2 shows different crystal cuts;
Figure 3 shows the frequency-temperature characteristics for different crystal cuts;
Figure 4 shows a set of frequency-temperature characteristics for AT cuts of different angles;
Figure 5 shows a frequency-temperature characteristic for a BT cut;
Figure 6 shows a typical angle choice for an AT cut;
Figure 7 shows an example of a central control device in more detail;
Figure 8 shows an example of a remote device in more detail;
Figure 9 shows clock signals in a first situation;
Figure 10 shows clock signals in a second situation;
Figure 11 shows distributions of time intervals;
Figure 12 shows a temperature measurement method;
Figure 13 shows experimental results; and
Figure 14 shows a general computer architecture suitable for implementing the processing within the system.

## DETAILED DESCRIPTION OF THE EMBODIMENTS

The invention provides a temperature sensing system and method. A chain of repeated sequential communications is made between a temperature sensing device having a second controller which is clocked by a second crystal oscillator and a remote device having a first controller which is clocked by a first crystal oscillator. It is not necessary that the temperature dependency of the second crystal oscillator is higher/lower than the temperature dependency of the first crystal oscillator. Preferrably the frequency shift amount caused by temperature change of second crystal oscillator is less than that of first crystal oscillator. Preferrably, the environment of the remote device has a less stable temperature than the environment of the temperature sensing device, or in other words, the temperature of the first crystal oscillator is less stable than the temperature of the second crystal oscillator. A time interval associated with the chain of repeated communications is measured and from this a clocking frequency and hence the temperature at the remote device can be derived, based on knowledge of the frequency-temperature characteristics of the first crystal oscillator.

Figure 1 shows a network of a central control

device 1 and a set of remote load devices 2. The central control device 1 controls and communicates with the remote load devices 2 over a communication interface, in particular a bus 7.

In one example, the overall system is a lighting system, in which the central control device is a main (upstream) lighting controller and the remote devices are luminaires.

The invention makes use of communication between the central control unit 1 and the luminaires 2 by which the central controller functions as an interrogator and the luminaries function as responders.

In a regular networked lighting system of this type, the upstream central control unit, such as segment controller, is an existing part of the system. By providing software code within the existing software, additional communications functions may be realized. The control board, based on a controller, in particular a microcontroller, in each luminaire can function as a downstream responder also by using software modifications.

The central control unit 1 is responsible for sending signals to the luminaires 2, analyze data and output a temperature sensing result. The control board in each luminaire receives commands and signals from the central controller and sends back responding signals.

As mentioned above, the crystal oscillator is key component in all microcontroller based digital systems, as it provides the periodic pulses for use as the microcontroller clock signal. All operations of the microcontroller are based on this signal. If the output of the crystal oscillator is changed, for example the frequency is increased, the operation of the microcontroller will be slightly faster than before. The speed will reduce when the frequency drops.

This invention is based on observing the frequency variance indirectly, by measuring a time penalty for certain software instructions that have a fixed machine cycle. Temperature is one variable which affects the output frequency of the crystal, so that temperature can be derived by measuring variance of the microcontroller operation time.

There are three main factors which have an impact on the output of a crystal oscillator. These are the capacitance of the load, the excitation power and temperature.

In a typical application, the load capacitance and excitation power for the crystal oscillator are determined by electrical circuit. Thus, these two factors will not affect the crystal oscillator frequency once the hardware is fixed. Therefore, the temperature dependency remains the only significant cause for frequency variation.

Different crystal oscillators have different frequency-temperature (f-T) curves. The f-T characteristics are strongly related to the process by which crystals has been cut from a quartz sheet.

Figure 2 illustrates the different cutting processes, including AT, BT, CT, DT, GT and NT cuts. Different cutting methods cause different f-T curves as shown in Figure 3, which shows frequency versus temperature.

The frequency-temperature characteristics of the crystal are categorized into two types according to its shape of curve. One is a tertiary curve and the other is a quadratic curve.

The typical frequency-temperature characteristics of AT and BT cuts are shown in Figures 4 and 5, respectively. The set of curves shown in Figure 4 depend on the angle of the cut so that the angle at which the quartz plate is cut from a quartz bar determines the frequency vs. temperature characteristics of a crystal unit.

AT cut crystal units are most widely used because they produce smaller frequency changes in response to temperature changes in the room temperature range. The change in frequency follows a series of 3rd degree S-Curves as shown in Figure 4.

Adjustment of the cut angle allows the crystal design engineer to select the desired temperature coefficient for the application. To get best frequency stability at a room temperature range, a particular cut angle is used. As shown in Figure 6, the proper cut-angle gives the bold line 60 which is flat around 20 degrees. This corresponds to the most popular cut-angle for a crystal oscillator. The resulting curve is a monotone increasing function.

There is a clear mathematical expression for the temperature - frequency function of an AT-cut crystal oscillator, which is provided by the manufacturer. A typical example is:

$$\frac{\Delta f}{f_0} = a_0\left(T - T_0\right) + c_0\left(T - T_0\right)^3$$

$T_0$ is reference temperature;
$f_0$ is frequency at temperature $T_0$;
$a_0$ is a temperature coefficient of the fundamental;
$c_0$ is a temperature coefficient of the 3rd overtone .

In the system of Figure 1, the upstream controller 1 may be considered to be in a constant temperature environment, such as room temperature. The microcontroller and crystal have the best frequency stability. Thus, each machine cycle has the same time expense with no frequency variance according to the corresponding temperature-frequency curve.

The luminaires 2 work in a practical environment which means the temperature changes according to different working conditions. For example, when the luminaire is working, the power dissipation will heat the whole luminaire including the control board which includes the crystal oscillator especially for a compact LED luminaire in which the LED driver (control board) is integrated with or very close to the LEDs. This leads to a frequency change which follows the known curve. The speed of the microcontroller changes accordingly. Thus

by detecting the temperature of the crystal oscillator on the driver board, the status of the LED can be monitored. Of course, the temperature of the drivers could also be affected by other factors, such as the lighting system being in an abnormal condition, etc. By detecting the temperature of remote luminaires, a health condition of the luminaires can be obtained.

When the same program is run by the microcontroller, the time expense is different from before. Based on the known frequency-temperature function, the accurate temperature change can be derived based on time differences.

It is challenging to measure directly a time difference at different temperatures because the frequency variance is very small. Usually for an AT cut crystal, the variation is $\pm 25$ ppm for a temperature range of -55°C to +85°C.

To address this issue, the microcontroller in the luminaire 2 is operated in a responder mode. The upstream controller 1 sends a ping challenge signal and measures the time expense of responding from the remote downstream unit. By repeating this process hundreds or thousands of times, the time expense can be derived using statistical tools with high accuracy.

This ping challenge and the response together form a signal communication event between the upstream and downstream controller. The repetition of the process then forms a chain of communications. This overall chain forms a measurement period. Each communication can be based on any outward message which is sent from the upstream controller to the downstream controller and return message which is sent back from the downstream controller to the upstream controller. The timing at which a message is sent (and finally received) by the upstream controller will depend on the timing of the clock signal in the upstream controller. Similarly, the timing at which a message is received (and then sent) by the downstream controller will depend on the timing of the clock signal in the downstream controller. As a result, the overall communication conveys information about the relative timing of the two clock signals.

The central controller for example operates with a clock signal having a relatively high clock speed, whereas the controllers of the luminaires operate with a clock signal having a relatively low clock speed. As a result, an amount of delay which is introduced by the luminaire controller may be significant compared to the central controller clock frequency. This delay may show relatively large fluctuations. The central device can measure the time interval associated with this delay relatively precisely because of the faster clock signal whereas the luminaire may react to a reception of a challenge signal by sending a response signal relatively soon or relatively late, depending on whether the edges or levels of both clock signals of both devices in each case match or not. Thus, a time interval of a single signal will not give much information about the clock frequency of the luminaire controller, whereas the use of multiple challenge and response signals enables statistical analysis to be used to determine the luminaire clock frequency.

The time interval which is measured is for example the length of time, expressed as the number of clock periods of the faster upstream controller clock, which has elapsed between the upstream controller clock signal edge which corresponds to the sending of the challenge signal and upstream controller clock signal edge which corresponds to the receipt of the response signal. As a result, all timing measurements may be made at the upstream controller based on the faster upstream controller clock. The whole timing process is thus controlled from the upstream side with the downstream controller simply following a dumb response routine.

Note that the time interval may include fixed time durations not related to the clock speeds, for example propagation delays. Furthermore, it is not essential that the response is provided immediately to the challenge signal. There may be a delay of a number of clock cycles at the downstream controller, to process the challenge and generate the response. These elements do not change the operation of the method.

This process will now be described in more detail.

Figure 7 shows an example of the central controller 1 which functions as a temperature measurement device. This is an upstream unit.

The temperature measurement device 1 comprises a transceiver 11,13 for transmitting and receiving signals. A transmitter 11 is configured to transmit an activation signal to a remote device 2 for activating this remote device 2. The transmitter part 11 is also configured to transmit a number of challenge signals to the activated remote device 2. Such an activated remote device 2 is configured to respond to the number of challenge signals by sending back a response signal per challenge signal to the temperature measurement device 1. A receiver 13 of the temperature measurement device 1 is configured to receive the response signals from the activated remote device 2. The temperature measurement device 1 further comprises a controller 14 configured to determine time intervals present between transmissions of the challenge signals on the one hand and receptions of the response signals on the other hand. The controller 14 is further configured to derive a temperature from an analysis of the time intervals.

These response signals are not to be confused with reflection signals that result from impedance mismatching. The activation signal may for example comprise an address for addressing the remote device 2.

Usually, the analysis comprises a statistical analysis, such as for example a calculation of a mean value or any other value of the time intervals or functions thereof or such as for example an analysis of a distribution or any other spread of the time intervals or functions thereof, or such as for example a determination of a minimum value of the time intervals or functions thereof.

The transmitter 11 is configured to transmit the

number of challenge signals periodically or randomly.

In Figure 7, the transceiver 11, 13 is coupled to a bus interface 15, that is further coupled to the communication bus 7, but alternatively the bus interface 15 could be left out or integrated into said transceiver 11, 13. A controller 14 controls and/or communicates with the transmitter 11 and the receiver 13 and the bus interface 15, and further controls and/or communicates with a user interface 16. An example of such a controller 14 is a processor / memory combination that is operated with a clock signal having a relatively high clock speed, like for example 10 MHz or 100 MHz etc. The (second) crystal oscillator 12 of the central controller is also shown schematically.

Figure 8 shows an example of a remote device 2. This is a downstream unit.

The remote device 2 is configured to be interrogated by the temperature measurement device 1 as shown in Figure 7 and comprises a transceiver 21, 23. A receiver 21 of the transceiver is configured to receive the activation signal from the temperature measurement device 1 for activating this remote device 2. The receiver 21 is also configured to receive the number of challenge signals from the temperature measurement device 1. The transmitter 23 of the transceiver of the remote device 2 is configured to send back, in response to receptions of the number of challenge signals, the response signal per challenge signal to the temperature measurement device 1. The remote device 2 may further comprise a load 26 such as for example a light dot or a lamp.

In Figure 8, the receiver 21 and the transmitter 23 are coupled to a bus interface 25, that is further coupled to the communication bus 7, but alternatively the bus interface 15 could be left out or integrated into said receiver 21 and said transmitter 23.

A controller 24 controls and/or communicates with the receiver 21 and the transmitter 23 and the bus interface 25 and the load 26. An example of such a controller 24 is a processor / memory combination that is operated with a clock signal having a relatively low clock speed, like for example 1 MHz or 10 MHz etc. Usually, the relatively high clock speed of the clock signal of the controller 14 is higher than the relatively low clock speed of the clock signal of the controller 24. The (first) crystal oscillator 22 of the remote device is also shown schematically.

In Figure 9, clock signals are shown in a first situation. In this first situation, a rising edge of the clock signal having the relatively high clock speed of the controller 14 is situated in time just sufficiently before a rising edge of the clock signal having the relatively low clock speed of the controller 24. As a result, the remote device 2 can in one example react immediately to the challenge signal from the temperature measurement device 1 by sending back the response signal to the temperature measurement device 1. A minimum value of a total delay D1 is a duration of a time interval present between a transmission of the challenge signal and a reception of the response signal, at the next rising edge of the controller clock signal.

In Figure 10, clock signals are shown in a second situation. In this second situation, a rising edge of the clock signal having the relatively high clock speed of the controller 14 is situated in time insufficiently before a the first shown rising edge of the clock signal having the relatively low clock speed of the controller 24. As a result, the remote device 2 can only react later to the challenge signal from the temperature measurement device 1 by sending back the response signal to the temperature measurement device 1 shortly after the next rising edge of the clock signal having the relatively low clock speed of the controller 24. A maximum value in this scenario of a total delay D2 is a duration of a time interval present between a transmission of the challenge signal and a reception of the response signal at the next rising edge.

This assumes the execution of signals by the upstream controller is trigged by the rising edge of clock signal. Of course, the triggers could equally be at the falling edge of the clock signals.

This maximum delay (as a number of the faster clock cycles) in particular will depend on the absolute frequency of the slower clock signal. Thus, while the challenge and response shown in Figure 9 does not convey significant information about the clock frequency, the challenge and response of Figure 10 does.

Instead of responding immediately, the response may be made after a fixed number (which may be 1 or more) of clock cycles of the remote device. In such a case, even the most rapid response conveys information about the speed of the slower clock.

The above analysis is based on the assumption that the time expense of the signal propagation on the cable between the upstream unit and the downstream unit is zero. Actually the time expense caused by cable is not zero but it does not affect the analysis above because it is a fixed number for a given cable length. The time expense caused by the cable is thus cancelled by the algorithm as explained further below.

By sending a large set of challenges and responses, a statistically significant set is obtained. For example, the average number of faster clock pulses for a large sample of data will give an accurate indicator of the period of the slower clock period.

As can be seen from the example above, one time interval will not give much information about the clock frequency of a remote device because of the amount of possible variation. By analysis of a number of time intervals, the frequency of operation of the remote device can be determined much better. The number of challenge signals and time intervals comprises at least two challenge signals and time intervals, preferably at least ten challenge signals and time intervals, more preferably at least one hundred challenge signals and time intervals etc. There may even be 1000 of more challenges and responses. For a sufficient number of challenge signals and time intervals, the set of time intervals durations will satisfy an even distribution.

Figure 11 shows distributions of time intervals. Figures 11A to 11E show distributions of time intervals for a remote device which is operating at different (reducing) frequencies.

Clearly, from Figure 11A to Figure 11E, the distributions are shifting to the right.

For the time intervals related to Figure 11A, a calculation of a mean value of the time intervals will result in a smaller value than a similar calculation for the time intervals related to Figure 11B and so on. For the time intervals related to Figure 11A, a determination of a minimum value of the time intervals will result in a smaller value than a similar calculation for the time intervals related to Figure 11B and so on due to the slower processing of the respond signal.

The distribution or any other spread of the time intervals maybe used for analysis.

An example of the signal processing that may be applied will now be presented in more detail.

A calibration stage is first carried out. As a minimum, the calibration takes place at a known temperature. However, more preferably, it involves taking measurements at two known temperatures; T1 and T2.

At the first calibration temperature T1 a number of steps are carried out:

Step 1: The upstream unit sends a command with a specific address to activate a selected unit at downstream side. The specific downstream unit transitions to a responder mode and then waits for a "ping" signal from the upstream unit. Other downstream units are still in their "idle" state .

Step 2: The upstream unit sends a pulse as a "ping signal " to the specific downstream unit, and starts a timer at same time.

Step 3: The downstream unit receives the "ping " signal and sends back a pulse immediately.

Step 4: The upstream unit stops the timer at once when it detect the response pulse from the downstream side.

Step 5: The upstream unit saves the timer's readout in a register for further calculation. The timer is then reset for the next action.

Step 6: The steps 2 to 5 are repeated hundreds or thousands of times.

Step 7: The average time value is calculated based on the data in the register.

Step 8: The final result is saved as reference data *t_ref1* to be used for measurement.

Step 9: The determined crystal frequency *f1* at temperature T1 is obtained from the frequency-temperature curve and from the formula for the first crystal oscillator.

At the second calibration temperature T2, the steps 2 to 7 above are again carried out. The final result save in step 8 is then reference data *t_ref2.*

The determined crystal frequency in step 9 is then *f2* at temperature T2 again based on the frequency-temperature curve and from the formula for the first crystal oscillator.

A reference time value and corresponding reference frequency value are then obtained:

$$t_ref = t_ref2 - t_ref1$$

$$f_ref = f2 - f1$$

This calibration process thus provides a mapping between a change in time value for the response to the ping message and a change in frequency. The change in time value becomes a reference time value and the change in frequency becomes a reference frequency value. By deriving change values as the references, it becomes possible to compensate for any constant time interval contributions.

After the calibration, the system is ready for use.

This involves performing a temperature measurement, namely when there is an unknown temperature Tx at the downstream side.

Steps 2 to 7 above are repeated to obtain an average time value t_measured.

A time difference is then calculated as *tx= t_measure - t_ref1.*

A frequency difference is then obtained as fx= *tx / t_ref*f_ref.*

This sets the ratio of the measured frequency to the reference frequency value as equal to the ratio of the measured time interval to the reference time value. In other words, it is based on a linear relationship between the time interval and the frequency.

The frequency of the crystal at the unknown temperature is then obtained as

$$f = fx + f1$$

This is a linear interpolation or extrapolation from the two measurements at known temperature.

According to the frequency temperature curve of first crystal and the formula for the first crystal oscillator, the temperature Tx can be derived.

Although the clock frequency in the upstream unit is higher than the clock frequency in the downstream unit, it still does not have enough resolution to measure (i.e. see) the time difference caused by temperature changes.

For example if a 16MHz crystal is used for for the upstream controller, the ultimate resolution for a timer in the upstream unit is 1/16Mhz=62.5ns. The timer in the control unit cannot recognize a time variance if is less than 62.5ns.

Unfortunately, the time variance caused by temperature is only several nanoseconds.

The time interval which is measured by the timer in the controller at temperature Ta may for example be 500 clock cycles. Even if the temperature changes to Tb, the readout of the timer may still be the same even though the time expense is fractionally longer.

One option is to increase the timer frequency to giver higher resolution but this is costly. The approach above is instead based on use of the statistical probability distribution. In particular, the readout signal from the timer should meet certain distribution rules relating to time measurement. If there is minor change to the time expense which is caused by temperature, the distribution curve of the readout signal from the timer will change as well.

For example, if 1000 timing measurements are taken at temperature Ta, all close to 500 clock cycles, the frequency density of the timing measurements may be as shown below:

| | | | |
|---|---|---|---|
| Timer readout | 499 | 500 | 501 |
| Frequency | 100 | 800 | 100 |

If the temperature is changed to Tb and assume the time expense increases by 2 nanoseconds. For 1000 time measurements, the data from the timer may be changed as shown below:

| | | | |
|---|---|---|---|
| Timer readout | 499 | 500 | 501 |
| Frequency | 90 | 801 | 109 |

This provides a shift to the increasing values, for example as shown in Figure 11. The readout is still within the range 499 to 501 but the change in distribution reflects the change in temperature.

It has been shown that this approach enables the time change to be distinguished with nanosecond accuracy even with a 16MHz clock. For example, the average timer value has increased from 500.000 to 500.019. The average value may be used, or measures of spread or other statistical measures may be used to obtain a more accurate representative timer value, which can then be converted to frequency and then temperature.

The controller 24 may introduce a delay for example owing to the fact that it needs several clock periods to detect the challenge signal and to instruct the response signal to be sent back. The controller 14 may also introduce a delay for example owing to the fact that it needs several clock periods to prepare the challenge signal and/or that it needs several clock periods to detect the response signal and/or that it needs several clock periods to determine the time intervals. These introduced delays are taken into account in determining the frequency value, in particular because the computations are based on reference time and reference frequency values which are based on change values.

Figure 12 shows a temperature sensing method.

In step 120 a chain of repeated sequential communications is initiated between a temperature sensing device having a second microcontroller which is clocked by a second crystal oscillator and a remote device having a first microcontroller which is clocked by a first crystal oscillator.

In step 122, a time interval associated with the chain of repeated communications is measured at the temperature sensing device. This time interval may be a value derived from the set of individual measurements, such as an average value, or a value which takes account of the degree of spread, or a value which takes account both of an average value and a degree of spread.

In step 124 a clocking frequency of the remote device is determined from the time interval.

In step 126, a temperature of the remote device is determined from the clocking frequency, also based on knowledge of the frequency-temperature characteristics of the first crystal oscillator.

The method may include a calibration step in which the remote device is known to be at a particular temperature such as room temperature or is even controlled to be at a regulated known temperature. This provides reference information for calibrating the subsequent temperature measurements.

The system and method have been tested by providing the upstream controller at room temperature and setting the temperature of the remote device in a temperature chamber. Figure 13 shows a plot of the measured temperature versus for different samples at different temperatures, and a plot of the actual controlled temperature. The near exact overlap, and hence accuracy of the measurement method, can be seen.

The method assumes that the central controller is at a fixed temperature. It may be sufficient for this to be room temperature (for example with a fluctuation of +/- 5 degrees). However, if desired, the central controller may be kept in a controlled temperature environment.

The system described above makes use of a controller / processor for processing data to determine the temperature.

Figure 14 illustrates an example of a computer 130 for implementing the controller or processor described above.

The computer 130 includes, but is not limited to, PCs, workstations, laptops, PDAs, palm devices, servers, storages, and the like. Generally, in terms of hardware architecture, the computer 130 may include one or more processors 131, memory 132, and one or more I/O devices 133 that are communicatively coupled via a local interface (not shown). The local interface can be, for example but not limited to, one or more buses or other wired or wireless connections, as is known in the art. The local interface may have additional elements,

such as controllers, buffers (caches), drivers, repeaters, and receivers, to enable communications. Further, the local interface may include address, control, and/or data connections to enable appropriate communications among the aforementioned components.

The processor 131 is a hardware device for executing software that can be stored in the memory 132. The processor 131 can be virtually any custom made or commercially available processor, a central processing unit (CPU), a digital signal processor (DSP), or an auxiliary processor among several processors associated with the computer 130, and the processor 131 may be a semiconductor based microprocessor (in the form of a microchip) or a microprocessor.

The memory 132 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 132 may incorporate electronic, magnetic, optical, and/or other types of storage media. Note that the memory 132 can have a distributed architecture, where various components are situated remote from one another, but can be accessed by the processor 131.

The software in the memory 132 may include one or more separate programs, each of which comprises an ordered listing of executable instructions for implementing logical functions. The software in the memory 132 includes a suitable operating system (O/S) 134, compiler 135, source code 136, and one or more applications 137 in accordance with exemplary embodiments.

The application 137 comprises numerous functional components such as computational units, logic, functional units, processes, operations, virtual entities, and/or modules.

The operating system 134 controls the execution of computer programs, and provides scheduling, input-output control, file and data management, memory management, and communication control and related services.

Application 137 may be a source program, executable program (object code), script, or any other entity comprising a set of instructions to be performed. When a source program, then the program is usually translated via a compiler (such as the compiler 135), assembler, interpreter, or the like, which may or may not be included within the memory 132, so as to operate properly in connection with the operating system 134. Furthermore, the application 137 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 133 may include input devices such as, for example but not limited to, a mouse, keyboard, scanner, microphone, camera, etc. Furthermore, the I/O devices 133 may also include output devices, for example but not limited to a printer, display, etc. Finally, the I/O devices 133 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 133 also include components for communicating over various networks, such as the Internet or intranet.

When the computer 130 is in operation, the processor 131 is configured to execute software stored within the memory 132, to communicate data to and from the memory 132, and to generally control operations of the computer 130 pursuant to the software. The application 137 and the operating system 134 are read, in whole or in part, by the processor 131, perhaps buffered within the processor 131, and then executed.

When the application 137 is implemented in software it should be noted that the application 137 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

## Claims

**1.** A temperature sensing device (1) for determining a temperature of a remote device (2), the remote device (2) having a first controller (24) which is clocked by a first crystal oscillator (22) having a frequency-temperature characteristics, the first controller (24) adapted to respond immediately or else a preset number of clock cycles later to communications from the temperature sensing device (1),
the temperature sensing device (1) comprising:

a second controller (14) which is clocked by a second crystal oscillator (12), wherein the clock speed of the clock signal of the second controller (14) is higher than the clock speed of the clock signal of the first controller (24), wherein the temperature sensing device (1) and the remote device (2) communicate electronically with each other over a communication interface (7),
wherein the second controller (14) is adapted to:

initiate a chain of repeated sequential communications between the temperature sensing device (1) and the remote device (2); each communication comprising transmission of a challenge signal to the remote device (2) and reception of a response signal per challenge signal;
measure time intervals presenting between transmissions of the challenge signals and receptions of the response signals associated with the chain of repeated communications;
from the time intervals determine a clocking frequency of the first controller (24) of the remote device (2); and
from the clocking frequency, determine a temperature based on knowledge of the frequency-temperature characteristics of the first crystal oscillator (22).

**2.** A device as claimed in claim 1, further comprising a transmitter (11) and a receiver (13), wherein the second controller (14) is adapted to the following step before the step of initiating a chain of repeated sequential communications:
controlling the transmitter (11) to transmit an activation signal to the remote device (2) for activating the remote device (2).

**3.** A device as claimed in claim 2, wherein the second controller (14) is adapted to perform a calibration process at two known temperatures, wherein the second controller (14) is adapted, to:

at each of the two known temperatures:

make a chain of repeated sequential communications between the temperature sensing device (1) and the remote device (2) and measure a time interval for each communication;
calculate a reference time interval value for each temperature; and obtain a crystal oscillator frequency of the first crystal oscillator (22) from the known characteristics of the first crystal oscillator (22); and

derive a reference time interval and corresponding reference frequency based on the difference between the reference time intervals and the difference between the crystal oscillator frequencies.

**4.** A device as claimed in any preceding claim, wherein the clocking frequency of the first controller (24) of the remote device (2) is obtained based on a statistical analysis.

**5.** A device as claimed in claim 4, wherein the statistical analysis comprises:

a calculation of a mean value or any other value of the time intervals or functions thereof; or
an analysis of a distribution or any other spread of the time intervals or functions thereof.

**6.** A device as claimed in any preceding claim, comprising a lighting system controller.

**7.** A temperature sensing system, comprising:

a temperature sensing device (1) as claimed in any preceding claim;
a remote device (2) connected to the temperature sensing device (1) by a communication interface (7), wherein the remote device (2) comprises:
a first controller (24) which is adapted to respond immediately or else a preset number of clock cycles later to communications from the temperature sensing device (1).

**8.** A system as claimed in claim 7, comprising a temperature sensing device (1) as claimed in claim 2, wherein the remote device (2) further comprises:

a receiver (21) adapted to receive the activation signal for activating the remote device (2) and adapted to receive the number of challenge signals; and
a transmitter (23) adapted to send back, in response to receptions of the number of challenge signals, the response signal per challenge signal to the temperature sensing device (1).

**9.** A system as claimed in claim 7 or 8, wherein the remote device (2) comprises a lighting load (26) and associated local lighting controller (24).

**10.** A system as claimed in any one of claims 7 to 9, wherein the first crystal oscillator (22) is an AT-cut quartz oscillator.

**11.** A system as claimed in any one of claims 7 to 10, wherein the second controller (14) of the temperature sensing device (1) is adapted to implement a calibration measurement with the remote device (2) at one or more known temperatures.

**12.** A temperature sensing method, comprising:

initiating a chain of repeated sequential communications between a temperature sensing device (1) having a second controller (14) which is clocked by a second crystal oscillator (12) and a remote device (2) having a first controller (24)

which is clocked by a first crystal oscillator (22), each communication comprising transmission of a challenge signal to the remote device (2) and reception of a response signal per challenge signal; wherein the temperature of the second crystal oscillator (12) is stable, and wherein the clock speed of the clock signal of the second controller (14) is higher than the clock speed of the clock signal of the first controller (24);
measuring time intervals presenting between transmissions of challenge signals and receptions of the response signals associated with the chain of repeated communications;
from the time intervals determining a clocking frequency of the first controller (24) of the remote device (2); and
from the clocking frequency, determining a temperature of the remote device (2) based on knowledge of the frequency-temperature characteristics of the first crystal oscillator (22).

**13.** A method as claimed in claim 12, comprising implementing a calibration determination of the clocking frequency with the remote device (2) at one or more known temperatures.

**14.** A method as claimed in claim 13, wherein the calibration determination comprises,
at each of two known temperatures:

providing a chain of repeated sequential communications between the temperature sensing device (1) and the remote device (2) and measuring a time interval for each communication;
calculating a reference time interval; and
obtaining the crystal oscillator frequency of the first crystal oscillator (22) from the known characteristics of the first crystal oscillator (22); and

obtaining a reference time interval and a corresponding reference frequency based on the difference between the reference time intervals and the difference between the crystal oscillator frequencies.

**15.** A computer program comprising code means which is adapted, when said program is run on a computer, to cause the temperature sensing device (1) of any of claims 1 to 6 to execute the steps of the method of any of claims 12 to 14.

**Patentansprüche**

**1.** Temperaturerfassungsvorrichtung (1) zum Bestimmen einer Temperatur einer dezentralen Vorrichtung (2), wobei die dezentrale Vorrichtung (2) eine erste Steuerung (24) aufweist, die durch einen ersten Kristalloszillator (22) getaktet ist, der eine Frequenz-Temperatur-Eigenschaft aufweist, wobei die erste Steuerung (24) angepasst ist, um sofort oder aber eine vorgegebene Anzahl von Taktzyklen später auf Kommunikationen von der Temperaturerfassungsvorrichtung (1) zu antworten,
die Temperaturerfassungsvorrichtung (1) umfassend:

eine zweite Steuerung (14), die durch einen zweiten Kristalloszillator (12) getaktet ist, wobei die Taktfrequenz des Taktsignals der zweiten Steuerung (14) höher ist als die Taktfrequenz des Taktsignals der ersten Steuerung (24), wobei die Temperaturerfassungsvorrichtung (1) und die dezentrale Vorrichtung (2) über eine Kommunikationsschnittstelle (7) elektronisch miteinander kommunizieren,
wobei die zweite Steuerung (14) konzipiert ist zum:

Initiieren einer Kette von wiederholten sequenziellen Kommunikationen zwischen der Temperaturerfassungsvorrichtung (1) und der dezentralen Vorrichtung (2); jede Kommunikation umfassend eine Übertragung eines Anforderungssignals zu der dezentralen Vorrichtung (2) und einen Empfang eines Antwortsignals pro Anforderungssignal;
Messen von Zeitintervallen, die zwischen Übertragungen der Anforderungssignale und Empfängen der Antwortsignale in Verbindung mit der Kette von wiederholten Kommunikationen bestehen;
ausgehend von den Zeitintervallen, Bestimmen einer Taktfrequenz der ersten Steuerung (24) der dezentralen Vorrichtung (2) und
ausgehend von der Taktfrequenz, Bestimmen einer Temperatur basierend auf einer Kenntnis der Frequenz-Temperatur-Eigenschaft des ersten Kristalloszillators (22).

**2.** Vorrichtung nach Anspruch 1, weiter umfassend einen Sender (11) und einen Empfänger (13), wobei die zweite Steuerung (14) vor dem Schritt des Initiierens einer Kette von wiederholten sequenziellen Kommunikationen für den folgenden Schritt angepasst ist:
Steuern des Senders (11), um ein Aktivierungssignal zu der dezentralen Vorrichtung (2) zu übertragen, um die dezentrale Vorrichtung (2) zu aktivieren.

**3.** Vorrichtung nach Anspruch 2, wobei die zweite Steuerung (14) angepasst ist, um einen Kalibrierungsprozess bei zwei bekannten Temperaturen durchzuführen, wobei die zweite Steuerung (14) angepasst ist zum:

bei jeder von den zwei bekannten Temperaturen:

Herstellen einer Kette von wiederholten sequenziellen Kommunikationen zwischen der Temperaturerfassungsvorrichtung (1) und der dezentralen Vorrichtung (2) und Messen eines Zeitintervalls für jede Kommunikation;
Berechnen eines Referenzzeitintervallwerts für jede Temperatur und
Erhalten einer Kristalloszillatorfrequenz des ersten Kristalloszillators (22) ausgehend von den bekannten Eigenschaften des ersten Kristalloszillators (22) und
Ableiten eines Referenzzeitintervalls und einer entsprechenden Referenzfrequenz basierend auf dem Unterschied zwischen den Referenzzeitintervallen und dem Unterschied zwischen den Kristalloszillatorfrequenzen.

**4.** Vorrichtung nach einem der vorstehenden Ansprüche, wobei die Taktfrequenz der ersten Steuerung (24) der dezentralen Vorrichtung (2) basierend auf einer statistischen Analyse erhalten wird.

**5.** Vorrichtung nach Anspruch 4, wobei die statistische Analyse umfasst:

eine Berechnung eines Mittelwerts oder eines anderen Werts der Zeitintervalle oder Funktionen davon oder
eine Analyse einer Verteilung oder einer anderen Aufteilung der Zeitintervalle oder Funktionen davon.

**6.** Vorrichtung nach einem der vorstehenden Ansprüche, umfassend eine Beleuchtungssystemsteuerung.

**7.** Temperaturerfassungssystem, umfassend:

eine Temperaturerfassungsvorrichtung (1) nach einem der vorstehenden Ansprüche;
eine dezentrale Vorrichtung (2), die mit der Temperaturerfassungsvorrichtung (1) durch eine Kommunikationsschnittstelle (7) verbunden ist, wobei die dezentrale Vorrichtung (2) umfasst:
eine erste Steuerung (24), die angepasst ist, um sofort oder aber eine vorgegebene Anzahl von Taktzyklen später auf Kommunikationen von der Temperaturerfassungsvorrichtung (1) zu antworten.

**8.** System nach Anspruch 7, umfassend eine Temperaturerfassungsvorrichtung (1) nach Anspruch 2, wobei die dezentrale Vorrichtung (2) weiter umfasst:

einen Empfänger (21), der angepasst ist, um das Aktivierungssignal zum Aktivieren der dezentralen Vorrichtung (2) zu empfangen, und angepasst ist, um die Anzahl von Anforderungssignalen zu empfangen; und
einen Sender (23), der angepasst ist, um, als Reaktion auf Empfänge der Anzahl von Anforderungssignalen, das Antwortsignal pro Anforderungssignal zu der Temperaturerfassungsvorrichtung (1) zurückzusenden.

**9.** System nach Anspruch 7 oder 8, wobei die dezentrale Vorrichtung (2) eine Beleuchtungslast (26) und eine zugehörige lokale Beleuchtungssteuerung (24) umfasst.

**10.** System nach einem der Ansprüche 7 bis 9, wobei der erste Kristalloszillator (22) ein AT-Schnitt-Quarzoszillator ist.

**11.** System nach einem der Ansprüche 7 bis 10, wobei die zweite Steuerung (14) der Temperaturerfassungsvorrichtung (1) angepasst ist, um eine Kalibrierungsmessung mit der dezentralen Vorrichtung (2) bei einer oder mehreren bekannten Temperaturen zu implementieren.

**12.** Temperaturmessverfahren, umfassend:

Initiieren einer Kette von wiederholten sequenziellen Kommunikationen zwischen einer Temperaturerfassungsvorrichtung (1) mit einer zweiten Steuerung (14), die durch einen zweiten Kristalloszillator (12) getaktet ist, und einer dezentralen Vorrichtung (2) mit einer ersten Steuerung (24), die durch einen ersten Kristalloszillator (22) getaktet ist, jede Kommunikation umfassend eine Übertragung eines Anforderungssignals zu der dezentralen Vorrichtung (2) und einen Empfang eines Antwortsignals pro Anforderungssignal;
wobei die Temperatur des zweiten Kristalloszillators (12) stabil ist und wobei die Taktfrequenz des Taktsignals der zweiten Steuerung (14) höher ist als die Taktfrequenz des Taktsignals der ersten Steuerung (24);
Messen von Zeitintervallen, die zwischen Übertragungen von Anforderungssignalen und Empfängen der Antwortsignale in Verbindung mit der Kette von wiederholten Kommunikationen bestehen;
ausgehend von den Zeitintervallen, Bestimmen einer Taktfrequenz der ersten Steuerung (24) der dezentralen Vorrichtung (2) und
ausgehend von der Taktfrequenz, Bestimmen einer Temperatur der dezentralen Vorrichtung (2) basierend auf einer Kenntnis der Frequenz-Temperatur-Eigenschaft des ersten Kristalloszillators (22).

**13.** Verfahren nach Anspruch 12, umfassend ein Implementieren einer Kalibrierungsbestimmung der Taktfrequenz mit der dezentralen Vorrichtung (2) bei einer oder mehreren bekannten Temperaturen.

**14.** Verfahren nach Anspruch 13, wobei die Kalibrierungsbestimmung umfasst, bei jeder von zwei bekannten Temperaturen:

Bereitstellen einer Kette von wiederholten sequenziellen Kommunikationen zwischen der Temperaturerfassungsvorrichtung (1) und der dezentralen Vorrichtung (2) und Messen eines Zeitintervalls für jede Kommunikation;
Berechnen eines Referenzzeitintervalls und Erhalten der Kristalloszillatorfrequenz des ersten Kristalloszillators (22) ausgehend von den bekannten Eigenschaften des ersten Kristalloszillators (22) und
Erhalten eines Referenzzeitintervalls und einer entsprechenden Referenzfrequenz basierend auf dem Unterschied zwischen den Referenzzeitintervallen und dem Unterschied zwischen den Kristalloszillatorfrequenzen.

**15.** Computerprogramm, umfassend ein Codemittel, das angepasst ist, wenn das Programm auf einem Computer ausgeführt wird, um zu bewirken, dass die Temperaturerfassungsvorrichtung (1) nach einem der Ansprüche 1 bis 6 die Schritte des Verfahrens nach einem der Ansprüche 12 bis 14 ausführt.

## Revendications

**1.** Dispositif de mesure de température (1) pour déterminer une température d'un dispositif à distance (2), le dispositif à distance (2)
présentant un premier dispositif de commande (24) qui est piloté par horloge au moyen d'un premier oscillateur à quartz (22) présentant une caractéristique fréquence-température, la première commande (24) étant adaptée pour répondre immédiatement ou alors après un nombre prédéfini de cycles d'horloge à des communications en provenance du dispositif de mesure de température (1),
le dispositif de mesure de température (1) comprenant :

un second dispositif de commande (14) qui est piloté par horloge par un second oscillateur à quartz (12), dans lequel la vitesse d'horloge du signal d'horloge du second dispositif de commande (14) est supérieure à la vitesse d'horloge du signal d'horloge du premier dispositif de commande (24),
dans lequel le dispositif de mesure de température (1) et le dispositif à distance (2) communiquent électroniquement l'un avec l'autre via une interface de communication (7),
dans lequel le second dispositif de commande (14) est adapté pour :

initier un chaîne de communications séquentielles répétées entre le dispositif de mesure de température (1) et le dispositif à distance (2) ;
chaque communication comprenant la transmission d'un signal de défi à un dispositif à distance (2) et la réception d'un signal de réponse par signal de défi ;
mesurer des intervalles de temps entre des transmissions des signaux de défi et des réceptions des signaux de réponse associés à la chaîne de communications répétées ;
à partir des intervalles de temps, déterminer une fréquence de rythme du premier dispositif de commande (24) du dispositif à distance (2); et
à partir de la fréquence de rythme, déterminer une température sur la base de la connaissance des caractéristiques fréquence-température du premier oscillateur à quartz (22).

**2.** Dispositif selon la revendication 1, comprenant en outre un transmetteur (11) et un récepteur (13), dans lequel le second dispositif de commande (14) est adapté à l'étape suivante avant l'étape d'initiation d'une chaîne de communications séquentielles répétées, l'étape consistant à :
commander au transmetteur (11) de transmettre un signal d'activation au dispositif à distance (2) pour activer le dispositif à distance (2).

**3.** Dispositif selon la revendication 2, dans lequel le second dispositif de commande (14) est adapté pour effectuer un processus de calibrage à deux températures connues, dans lequel le second dispositif de commande (14) est adapté pour :
à chacune des deux températures connues :

créer une chaîne de communications séquentielles répétées entre le dispositif de mesure de température (1) et le dispositif à distance (2) et mesurer un intervalle de temps pour chaque communication ;
calculer une valeur d'intervalle de temps de référence pour chaque température ; et
obtenir une fréquence d'oscillateur à quartz du premier oscillateur à quartz (22) à partir des caractéristiques connues du premier oscillateur à quartz (22) ; et
dériver un intervalle de temps de référence et

une fréquence de référence correspondante sur la base de la différence entre les intervalles de temps de référence et de la différence entre les fréquences d'oscillateur à quartz.

**4.** Dispositif selon l'une quelconque des revendications précédentes, dans lequel la fréquence de rythme du premier dispositif de commande (24) du dispositif à distance (2) est obtenue sur la base d'une analyse statistique.

**5.** Dispositif selon la revendication 4, dans lequel l'analyse statistique comprend :

un calcul d'une valeur moyenne ou d'une quelconque autre valeur des intervalles de temps ou des fonctions de ceux-ci ; ou
une analyse d'une distribution ou d'une quelconque transmission des intervalles de temps ou des fonctions de ceux-ci.

**6.** Dispositif selon l'une quelconque des revendications précédentes, comprenant un dispositif de commande de système d'éclairage.

**7.** Système de mesure de température, comprenant :

un dispositif de mesure de température (1) selon l'une quelconque des revendications précédentes ;
un dispositif à distance (2) relié au dispositif de mesure de température (1) via une interface de communication (7), dans lequel le dispositif à distance (2) comprend :
un premier dispositif de commande (24) qui est adapté pour répondre immédiatement ou alors après un nombre prédéfini de cycles d'horloge à des communications en provenance du dispositif de mesure de température (1).

**8.** Système selon la revendication 7, comprenant un dispositif de mesure de température (1) selon la revendication 2, dans lequel le dispositif à distance (2) comprend en outre :

un récepteur (21) adapté pour recevoir le signal d'activation pour activer le dispositif à distance (2).
et adapté pour recevoir le nombre de signaux de défi; et
un transmetteur (23) adapté pour renvoyer, en réponse aux réceptions du nombre de signaux de défi, le signal de réponse par signal de défi au dispositif de mesure de température (1).

**9.** Système selon la revendication 7 ou 8, dans lequel le dispositif à distance (2) comprend une charge d'éclairage (26) et un dispositif de commande d'éclairage local associé (24).

**10.** Système selon l'une quelconque des revendications 7 à 9, dans lequel le premier oscillateur à quartz (22) est un oscillateur AT-cut.

**11.** Système selon l'une quelconque des revendications 7 à 10, dans lequel le second dispositif de commande (14) du dispositif de mesure de température (1) est adapté pour mettre en œuvre une mesure de calibrage avec le dispositif à distance (2) à une ou plusieurs températures connues.

**12.** Procédé de mesure de température, comprenant les étapes consistant à :

initier une chaîne de communications séquentielles répétées entre un dispositif de mesure de température (1) présentant un second dispositif de commande (14) qui est piloté par horloge par un second oscillateur à quartz (12) et un dispositif à distance (2) présentant un premier dispositif de commande (24) qui est piloté par horloge par l'intermédiaire d'un premier oscillateur à quartz (22), chaque communication comprenant la transmission d'un signal de défi au dispositif à distance (2)
et la réception d'un signal de réponse par signal de défi ;
dans lequel la température du second oscillateur à quartz (12) est stable, et dans lequel la vitesse d'horloge du signal d'horloge du second dispositif de commande (14) est supérieure à le vitesse d'horloge du signal d'horloge du premier dispositif de commande (24) ;
mesurer des intervalles de temps se présentant entre des transmissions de signaux de défi et des réceptions des signaux de réponse associés à la chaîne de communications répétées ;
à partir des intervalles de temps, déterminer une fréquence de rythme du premier dispositif de commande (24) du dispositif à distance (2);
et
à partir de la fréquence de rythme, déterminer une température du dispositif à distance (2) sur la base de la connaissance des caractéristiques fréquence-température du premier oscillateur à quartz (22).

**13.** Procédé selon la revendication 12, comprenant la mise en œuvre d'une détermination de calibrage de la fréquence de rythme avec le dispositif à distance (2) à une ou plusieurs températures connues.

**14.** Procédé selon la revendication 13, dans lequel la détermination de calibrage comprend les étapes consistant à,
à chacune des deux températures connues :

fournir une chaîne de communications séquentielles répétées entre le dispositif de mesure de température (1) et le dispositif à distance (2)
et mesurer un intervalle de temps pour chaque communication ;
calculer un intervalle de temps de référence ; et obtenir la fréquence d'oscillateur à quartz du premier oscillateur à quartz (22) à partir des caractéristiques connues du premier oscillateur à quartz (22) ;
et
obtenir un intervalle de temps de référence et une fréquence de référence correspondante sur la base de la différence entre les intervalles de temps de référence et la différence entre les fréquences d'oscillateur à quartz.

**15.** Programme d'ordinateur comprenant un moyen de code qui est adapté, lorsque ledit programme est exécuté sur un ordinateur, pour amener le dispositif de mesure de température (1) selon l'une quelconque des revendications 1 à 6 pour effectuer les étapes du procédé selon l'une quelconque des revendications 12 à 14.

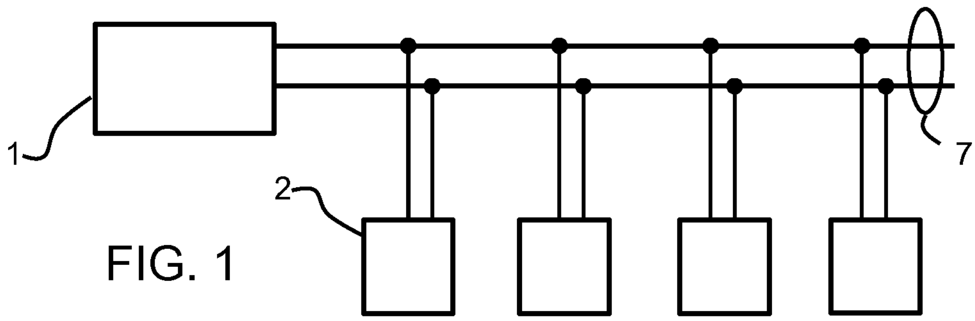


FIG. 1

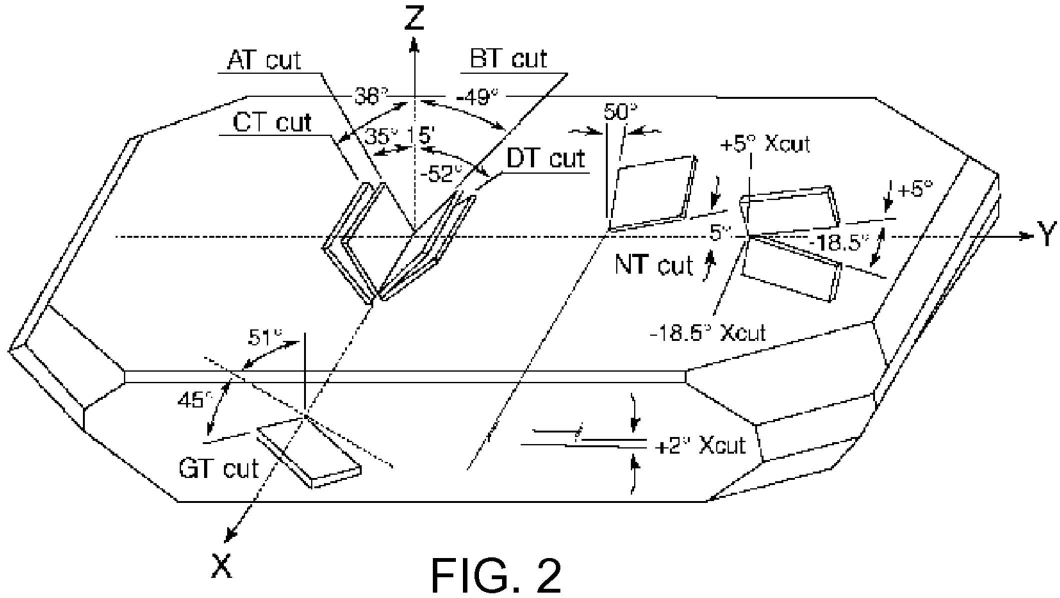


FIG. 2

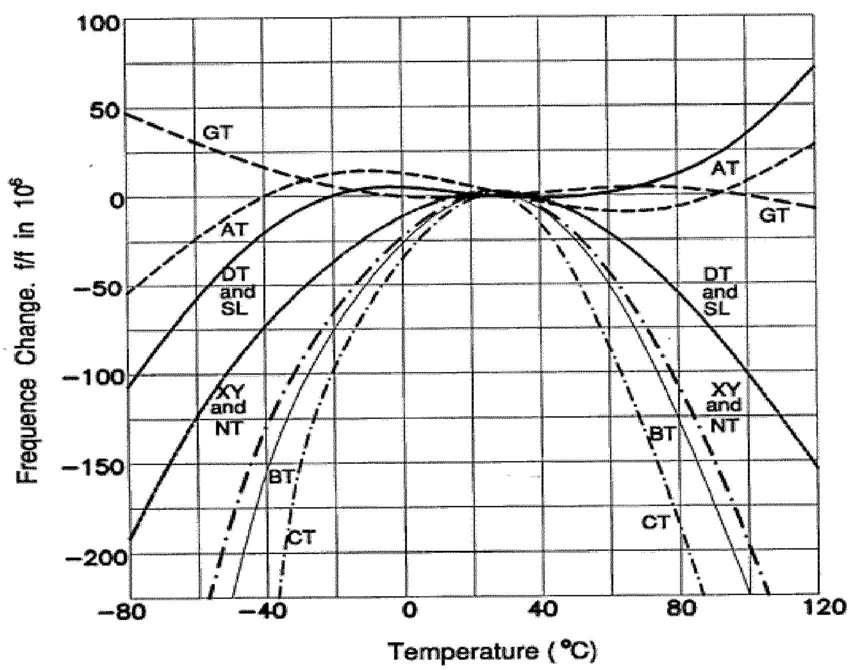


FIG. 3

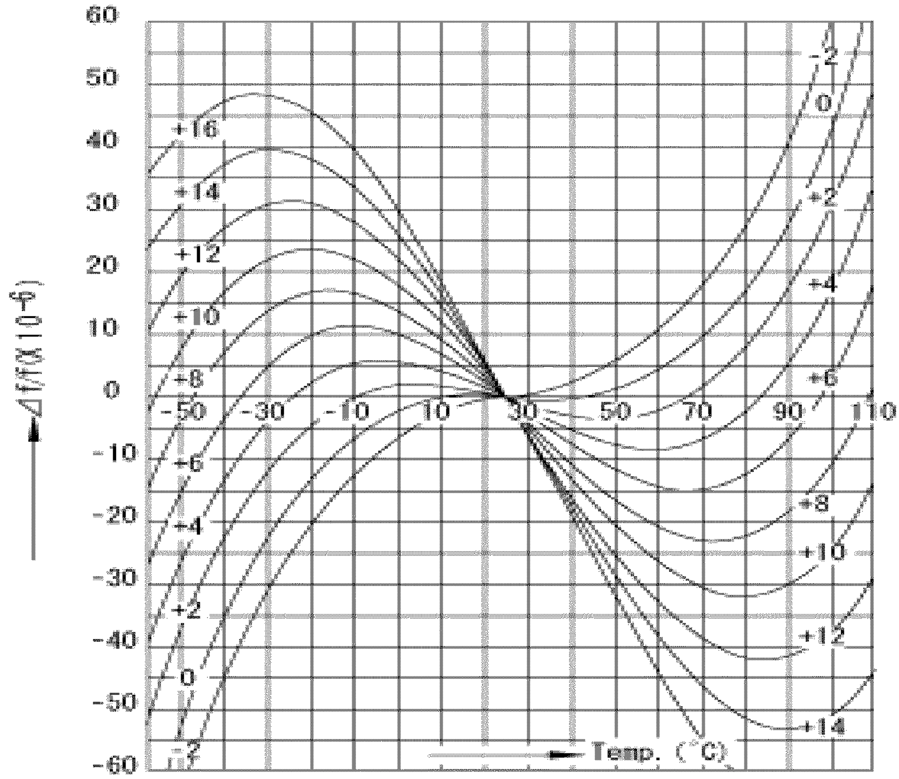
Δf/f(X10−6)
Temp. (°C)
60
50
40
30
20
10
0
-10
-20
-30
-40
-50
-60
-50
-30
-10
10
30
50
70
90
110
+16
+14
+12
+10
+8
+6
+4
+2
0
-2

FIG. 4

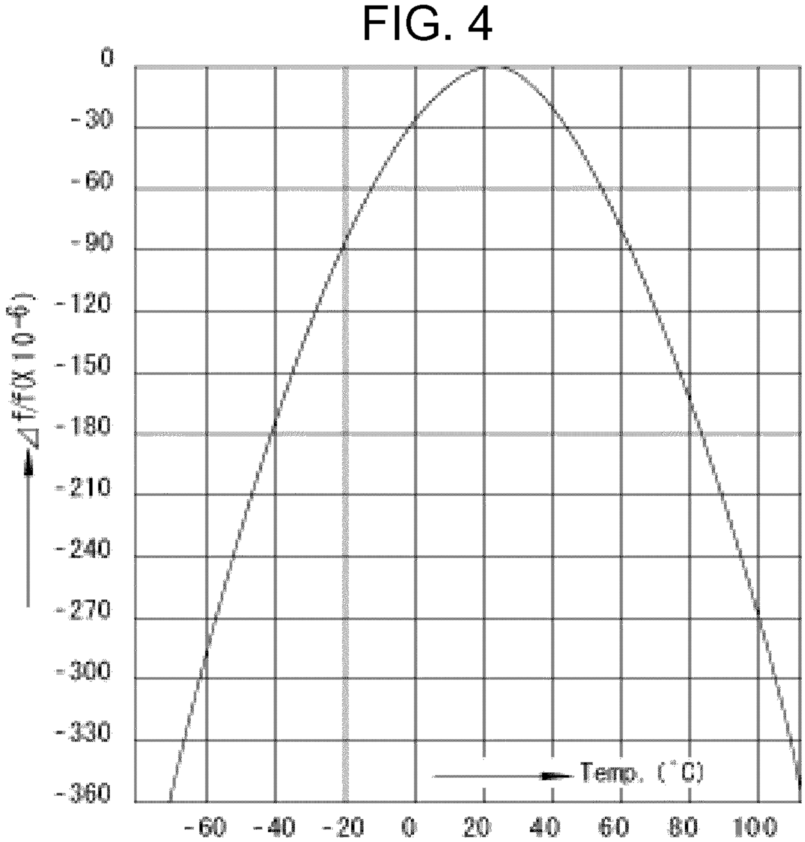
Δf/f(X10−6)
Temp. (°C)
0
-30
-60
-90
-120
-150
-180
-210
-240
-270
-300
-330
-360
-60
-40
-20
0
20
40
60
80
100

FIG. 5

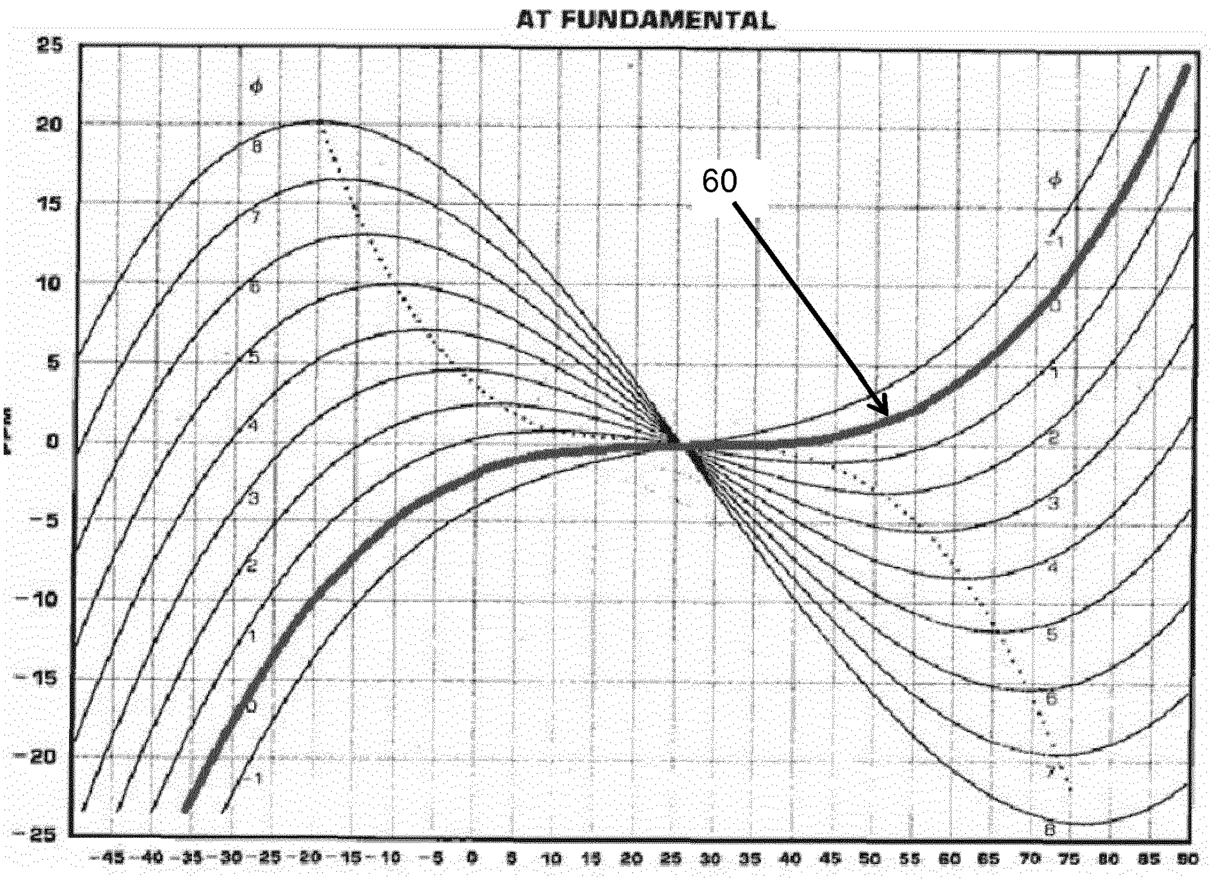
AT FUNDAMENTAL
60
ϕ
PPM
25
20
15
10
5
0
-5
-10
-15
-20
-25
-45 -40 -35 -30 -25 -20 -15 -10 -5 0 5 10 15 20 25 30 35 40 45 50 55 60 65 70 75 80 85 90

FIG. 6

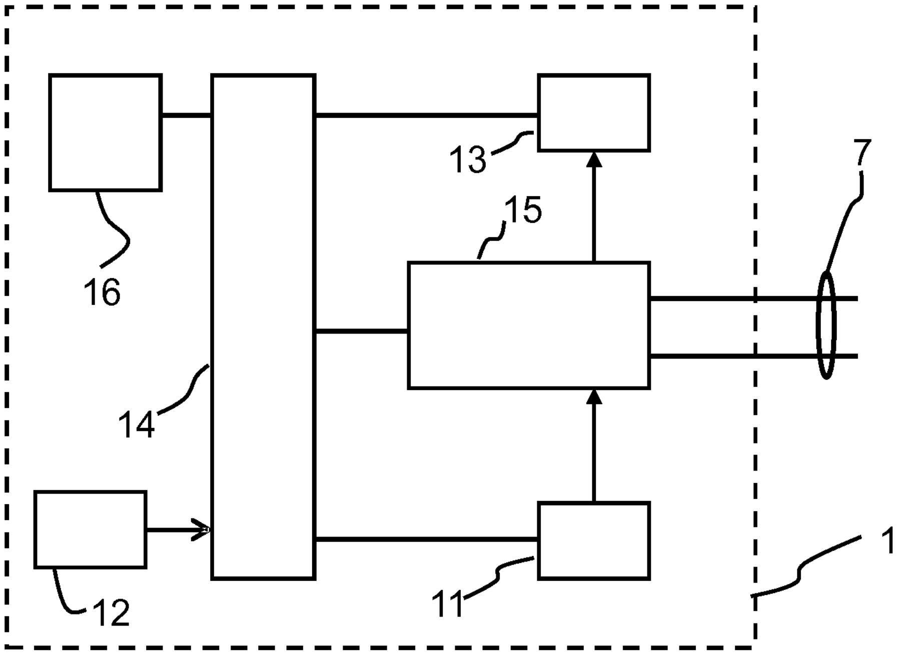


FIG. 7

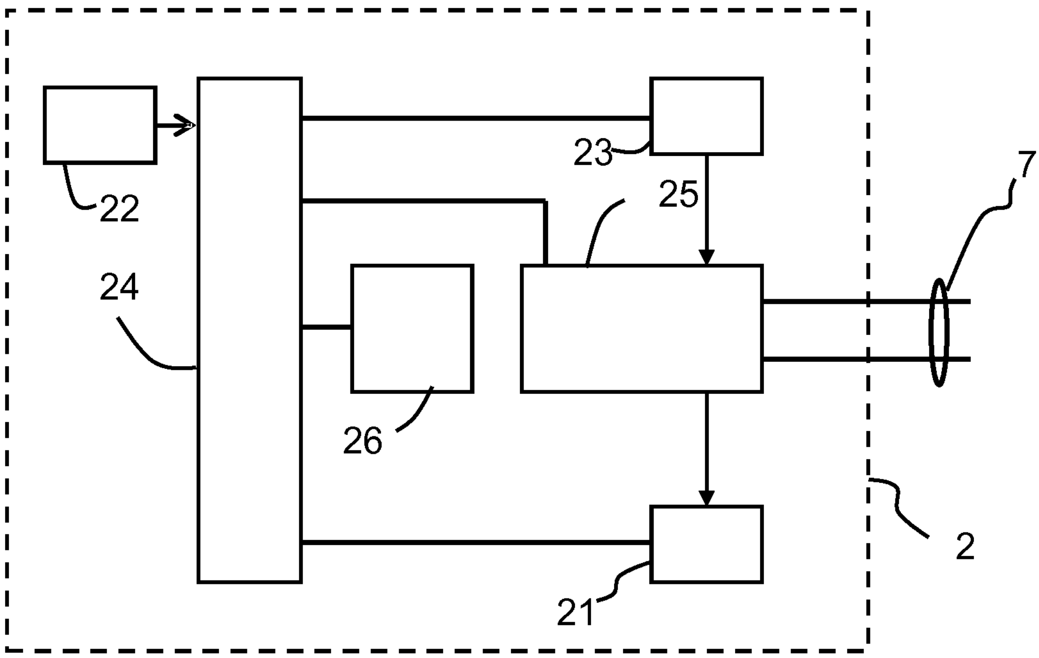


FIG. 8

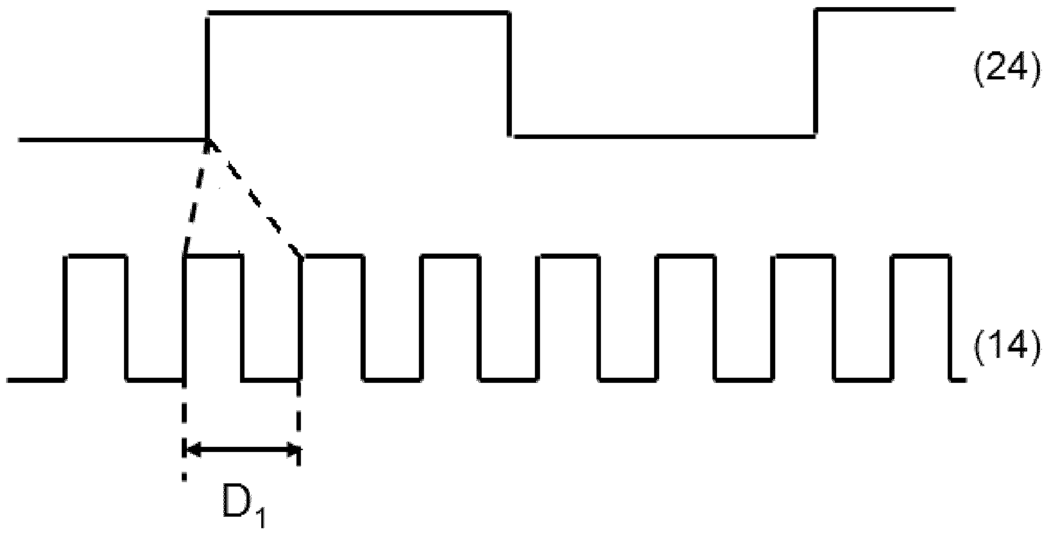


FIG. 9

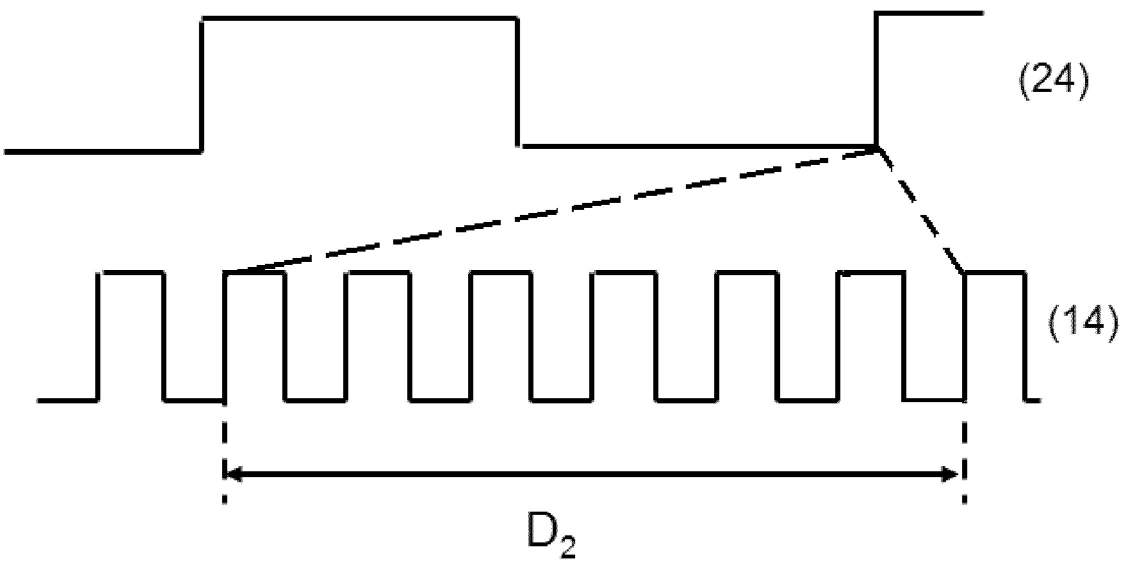


FIG. 10

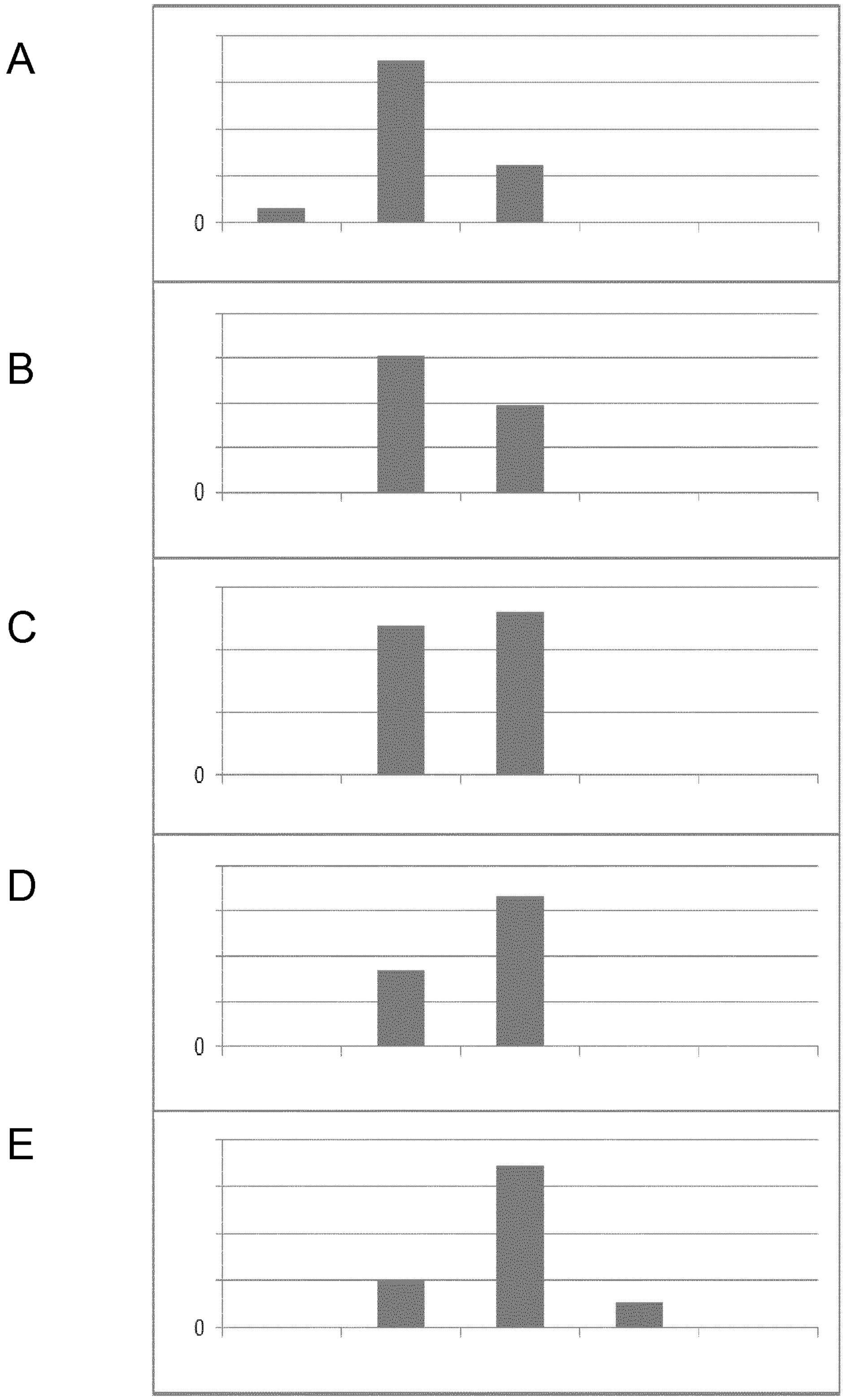


FIG. 11

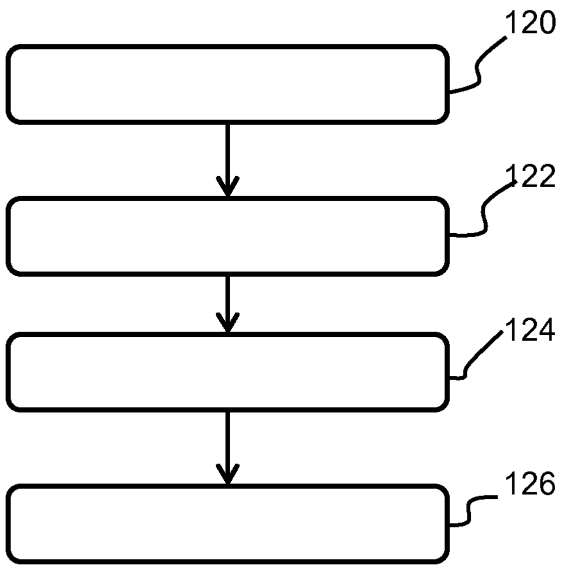


FIG. 12

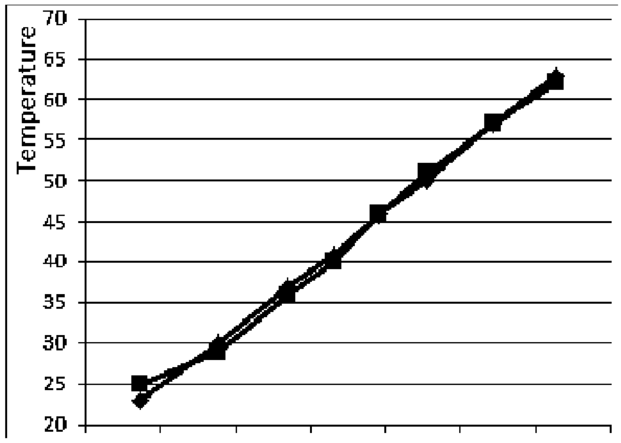


FIG. 13

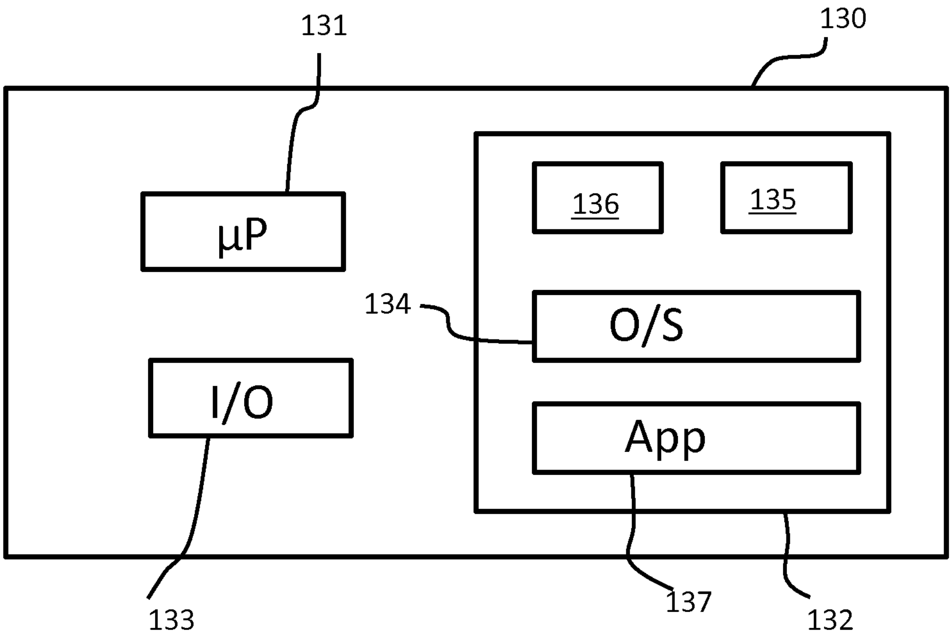


FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9228906 B
- JP 2011075520 A
- US 2016047695 A1